# EUROPEAN PATENT SPECIFICATION

(11) **EP 2 327 956 B1**
(45) Date of publication and mention of the grant of the patent: **22.01.2014**
(21) Application number: 09176628.7
(22) Date of filing: 20.11.2009
(51) Int. Cl.: G01B 11/06, G01B 11/25

(54) **Method and apparatus for determining the height of a number of spatial positions on a sample**
Verfahren und Vorrichtung zur Höhenbestimmung bei einer Reihe von räumlichen Positionen auf einer Probe
Procédé et appareil pour déterminer la hauteur d'un nombre de positions spatiales sur un échantillon

(43) Date of publication of application: 01.06.2011
(73) Proprietor: Mitutoyo Corporation, Kawasaki-shi Kanagawa 213-0012 (JP)
(72) Inventor: Jansen, Maarten Jozef, 5529 BB Casteren (NL); De Nooij, Frans, 5628 AD Eindhoven (NL)
(74) Representative: Eveleens Maarse, Pieter

(56) References cited:
- EP-A2- 1 471 327
- EP-A2- 1 471 327
- WO-A1-98/45745
- US-A1- 2002 149 781
- HANSEL T ET AL: "Deformation Measurements of High-Speed MEMS With Combined Two-Wavelength Single-Pulse Digital Holography and Single Phase Reconstruction Using Subpicosecond Pulses" IEEE JOURNAL OF SELECTED TOPICS IN QUANTUM ELECTRONICS, IEEE SERVICE CENTER, PISCATAWAY, NJ, US LNKD- DOI:10.1109/JSTQE.2009.2017032, vol. 15, no. 5, 1 September 2009 (2009-09-01), pages 1351-1358, XP011281756 ISSN: 1077-260X

## Description

The present invention relates to a method for determining the height of a number of spatial positions on a sample. More in particular the present invention relates to a method for determining the height of a number of spatial positions on a sample, as disclosed in WO-A-98/45745, defining a height map of a surface of said sample comprising the steps of irradiating the surface of the sample with light comprising a spatial periodic pattern which is periodic in a direction perpendicular to the optical axis and moving in a direction parallel to the direction in which the periodic pattern is periodic, scanning the surface in the direction of the optical axis and for each position of the surface, detecting the light reflected by the sample by a detector during the scanning, analysing the output signal of the detector and including for each spatial position of the detector the determination of the amplitude of the signal detected during the scanning and the determination of the scanning location where the amplitude is maximal.

In this prior art method the three or more images have to be taken in every scanning position. This plurality of image is needed to allow a reconstruction of the intensity signal over the full width of the pattern, so that the amplitude can be calculated for said scanning position. However the need for multiple images to be made in the same scanning position, with different positions of the pattern, requires the scanning motion to stop to make the images. This not only interrupts the scanning movement, but also takes a considerable time, lengthening the process.

EP-A-1 471 327 discloses a method and an apparatus wherein the movement in the z-direction does not have to stop. However this prior art method uses different projection and imaging paths, leading inter alia to a reduced depth of focus and hence to a mediocre height resolution.

The aim of the invention is to provide a novel method wherein the above disadvantages are avoided.

This aim is reached by a method for determining the height of a number of spatial positions on a sample, defining a height map of a surface of said sample comprising the steps of irradiating the surface of the sample with light comprising a spatial periodic pattern which is periodic in a direction perpendicular to the optical axis and moving in a direction parallel to the direction in which the periodic pattern is periodic, scanning the surface in the direction of the optical axis and for each position of the surface, and detecting the light reflected by the sample by a detector during the scanning, wherein in any scanning position only a single image is taken, wherein the movement of the phase of the spatial periodic pattern is an even movement and the scanning movement is an even movement, wherein the scanning speed bears a predetermined relation to the phase of the periodic pattern and wherein the analysing of the output signal of the detector includes for each spatial position of the detector the determination of the amplitude of the signal detected during the scanning and determining the scanning location where the amplitude is maximal, wherein the light reflected by the sample travels over partially the same path as the light irradiating of the sample and that during scanning, more than two images are taken during a cycle of the spatial periodic pattern.

Hence both movements can take place without stopping, so that it can be executed at a relatively high speed, thus increasing the measurement speed.

Further the combination of the projection and imaging paths enhances the resolution.

The same feature is expressed in an apparatus for determining the height of a number of spatial positions on a sample, defining a height map of a surface, the apparatus comprising a light source including pattern means adapted to generate a light beam having a spatial periodic pattern which is periodic in a direction perpendicular to the optical axis and which moves in the direction in which the pattern is periodic, an optical detector adapted to convert the received light into electrical signals, optical means including scanning means for directing light from the light source to the surface and for directing the light reflected by the surface to the optical detector, control means adapted to control the scanning means to perform a scanning action, to control the movement of the pattern means, to receive the signals from the optical detector and a processing unit to convert the signal received from the optical detector into a height map, wherein the control means are adapted to make only a single image in any scanning position, control the movement of the phase of the projected spatial periodic pattern to be an even movement, control the scanning movement to be an even movement, control the scanning speed to bear a predetermined relation to the phase of the projected periodic pattern and wherein the processing unit is adapted to analyse the output signal of the detector includes for each spatial position of the detector the determination of the amplitude of the signal detected during the scanning and determining the scanning location where the amplitude is maximal, wherein the optical paths established by the optical means between the sample and the light source and the detector respectively are at least partially common and that the control means are adapted to make more than two images during a cycle of the spatial periodic pattern.

In the invention, the light source for generating a light beam with a spatial periodic pattern which is periodic in a direction perpendicular to the optical axis can be implemented by a system that is based on: LCoS display, LCD display, DMD display, LED array, scanning a projected mask pattern by putting a tilting parallel plate, scanning of a physical grating, a dia or mask pattern, scanning mirror laser projection system. Essential is that the surface of the sample is irradiated with light comprising a spatial periodic pattern which is periodic in a direction perpendicular to the optical axis. As stated above there are several ways in which this can be achieved.

In this respect your attention is drawn to the fact that an even motion of a projected pattern can also be obtained by projecting an image of a physical grating that is not moving with an even motion. If the physical pattern is moved in a cyclic manner while using a strobing source, then the strobing sequence can be chosen such that the observed periodic pattern appears to be moving an a even motion for the observing camera.

A further preferred embodiment provides the feature that the spatial periodic pattern is a sinusoidal periodic pattern. The sinusoidal pattern is the pattern with only a single frequency component, that is the frequency of the sinusoidal component itself, not containing any higher harmonics, thus allowing a minimum number of images to reconstruct the pattern.

Another possibility for a spatial periodic pattern is a binary periodic stripe pattern. This pattern leads to a large number of harmonics, offering the possibility to use the harmonics for the determination of the axial location where the amplitude of the intensity signal is maximal.

Accordingly the same preferred embodiments provide apparatuses of said kind, wherein the pattern means are adapted to generate a sinusoidal periodic pattern or a binary periodic stripe pattern.

Preferably the light source generates a strobing light of which the light pulses are synchronized with the phase of the moving periodic pattern. The use of the strobing light source makes a shutter for the detector superfluous, making the construction of the apparatus simpler. Further it offers the possibility to use a grating as a pattern generator, wherein the grating only has to make a limited reciprocal movement.

The same embodiment provides an apparatus of the kind referred to above wherein the light source generates a strobing light of which the light pulses are synchronized with the phase of the moving periodic pattern.

To find the height position of a point on the specimen the signal of a camera pixel is processed in a similar method as is typically done by coherence peak detection methods that are commonly used in vertical scanning white light interferometry. More in particular a preferred embodiment provides the feature that the calculation of the amplitude of the periodic pattern are executed by performing a coherence peak detection method. In these methods also the height position is derived by determining a focus position that is related to the modulation amplitude of a time-modulated signal, except that the modulation is caused by an interference phenomenon instead of by observing a spatially modulated signal by means of a spatial light projector. Examples of such a method are disclosed in US-A-5,633,715; May 1,1992 / Vol. 17, No. 9 / OPTICS LETTERS, "Electronically scanned white-light interferometry: a novel noise-resistant signal processing"; Electronics Letters, 12th march 1992, vol 28 no6, "Fringe order identification in optical fibre white-light interferometry using centroid algorithm method" or LEFEVRE H. C.: 'White-light interferometry for optical fibre sensors'. Proc. OFS'7, Sydney. Australia, December 1990, Pub. IREE, ISBN 0-909-384-24-5, pp. 345-352.

An preferred example of such a method for the calculation of the amplitude of the periodic pattern comprises the steps of:
a- subjecting the intensity signal to a Fourier transform;
b- removing the signal components of the Fourier transformed signal which are not related to the modulation of the projected spatially scanned pattern including removing the phase conjugate frequencies;
c- subjecting the resulting signal to an inverse Fourier transform; taking the absolute value of the inverse Fourier transformed signal; and
d- determining the scanning position where the absolute maximum value is reached.

To obtain a full height map the calculations of the four steps are conducted for the signals from an array of camera pixels. The relation between the images taken at different but defined focal positions introduces new frequency components in the intensity signal. These can be removed by using filtering.

This embodiment also provides an apparatus, of which the control means are adapted to calculate the amplitude of the periodic pattern from the intensity signal by coherence peak detection methods that are commonly used in vertical scanning white light interferometry and most preferably by an apparatus of which the control means are adapted to calculate the amplitude of the periodic pattern by following steps of:
- subjecting the signal to a Fourier transform;
- removing the signal components of the Fourier transformed signal of which are not related to the modulation of the projected spatially scanned pattern.
- removing the phase conjugate frequencies;
- subjecting the resulting signal to an inverse Fourier transform;
- taking the absolute value of the inverse Fourier transformed signal; and
- determining the scanning position where the absolute maximum value is reached.

Finally the invention also relates to a data carrier, containing digital instructions for performing a method as defined in any of the method claims.

Subsequently the present invention will be elucidated with the help of the accompanying drawings, wherein:

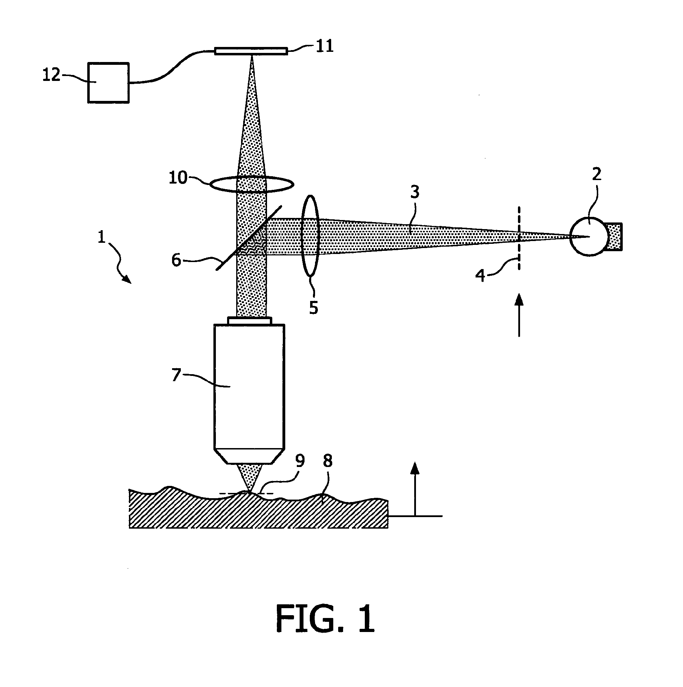

Figure 1: depicts an apparatus which can be used for executing the method according to the present invention;
Figure 2: depicts the periodic pattern in three different positions, the captured images in the three positions and the resulting curve representing the modulation depth according to the prior art;
Figure 3: depicts the curve representing the modulated intensity signal in the invention; and
Figure 4: depicts a diagram representing the method according to the invention.

The apparatus 1 according to the invention comprises a light source 2, adapted to generate a light beam 3, a spatial pattern filter 4 which can be moved in a direction perpendicular to the optical axis of the light beam 3, a lens 5, and a beam splitter 6. Further the apparatus 1 comprises an objective 7, adapted to receive and conduct the light beam 3 and means, not depicted in the figure for fixing a sample 8 of which the height map of its upper surface 9 is to be determined. The apparatus is further provided of a second lens 10, a two dimensional light detector 11, adapted to convert the light beam received into an electrical signal, which is sent to a control- and processing unit, which is preferably formed by a digital computer 12. The objective 7 is adapted to scan the sample in the axial direction, but this may also be reached by moving the sample.

The light beam 3 generated by the light source is subjected to the spatial pattern filter 4, travels through the lens 5 and to the beam splitter 6, which deviates the light beam 3 to the objective 7 which directs the light beam to the surface 9 of the sample 8. The light beam reflected by the sample travels through the objective 7, the beam splitter 6 and the second lens 10 and hits the detector 11.

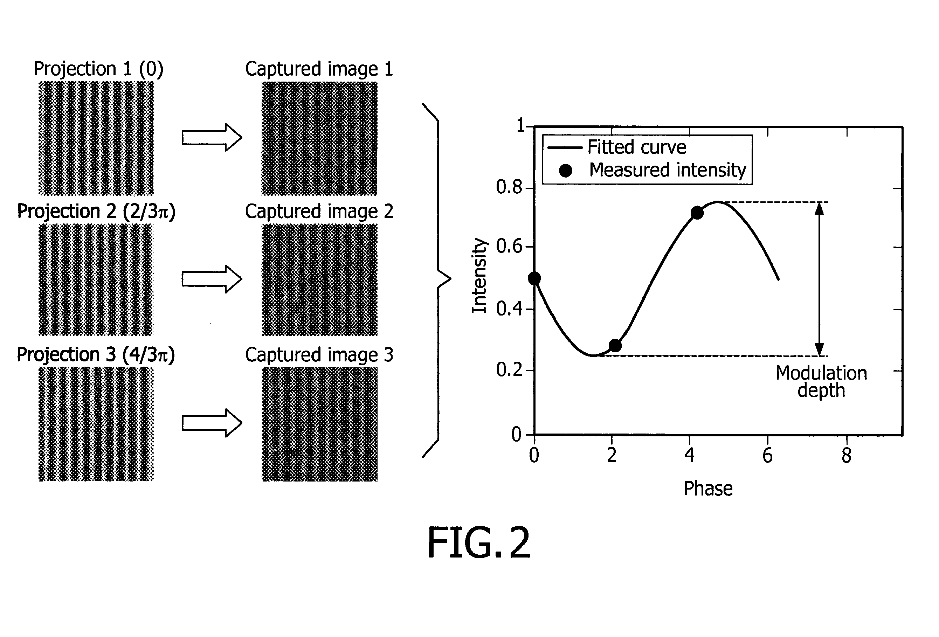

The spatial pattern filter 4 comprises a pattern that is essentially periodic in one direction, to obtain a substantially stripe like pattern. Although any periodic spatial pattern may be used, it appears that the use of a sinusoidal pattern is advantageous. As stated before, the pattern filter 4 is adapted to be moved in a direction perpendicular to the axis of the light beam 3. The stripes of the stripe pattern also extend perpendicular to the axis of the light beam 3 and perpendicular to the direction of movement. This implies that the direction of the sinusoidal variation extends parallel to the direction of movement. Such a spatial periodic pattern is depicted in the three left hand parts of figure 2. These three patterns are mutually shifted over 120 ° due to the movement of the pattern filter 4. Until so far described this apparatus belongs to the prior art.

Further according to the prior art this apparatus is used to make several pictures by the detector 11 in every scanning position of the objective 7, such as depicted in the middle part of figure 2. Then the signals into which these three pictures are converted by the detector are processed by the processing unit 12 to reconstruct the intensity function for every pixel or spatial unit within the whole surface of the detector and the sample as a function of the phase of the shift of the pattern. Such a reconstruction for a single pixel is depicted in the right hand part of figure 2. The use of three pictures of different phase positions of the spatial filter or alternative projecting means allows to reconstruct the intensity signal. For each of the spatial positions the modulation depth or amplitude is calculated. At the positions where the projected image of the spatial filter or projecting means is in focus, the amplitude of the signal for said pixel or spatial position is maximal. The scanning position at which this amplitude is maximal is assumed to be the height of the sample. This method requires three images to be taken in every scanning position, so that the scanning movement is intermittent.

Contrary thereto the novel method and apparatus according to the present invention allows a continuous scanning movement so that for every scanning position only a single picture is available. This implies that pictures made by the method and apparatus according to the present invention will necessarily relate to different scanning positions. However, due to the fact that the difference in scanning position between consecutive pictures is limited and the presence of a fixed relation between the scanning movement and the phase change of the projected spatial pattern, there is a relation between subsequent pictures which can be used for reconstruction of the required intensity signal. Of utmost importance is the fixed relation between the phase of the projected spatial pattern and the scan movement of the objective or sample.

However there are some boundary conditions to allow the method of the invention to work. Initially the frequency of the shutter of the camera or the strobing frequency of the strobing light source is set such that more than two pictures are made during a full cycle of the spatial filter, to satisfy the Nyquist criteria so that the intensity signal can be reconstructed. Contrary to the prior art, the number of pictures per cycle does not have to be an integer.

Further the ratio between the modulation speed and the scanning speed is related to the required depth of field. With a preselected number of pictures per cycle, this implies that more pictures must be taken to obtain a more accurate depth of field, albeit with a lower speed.

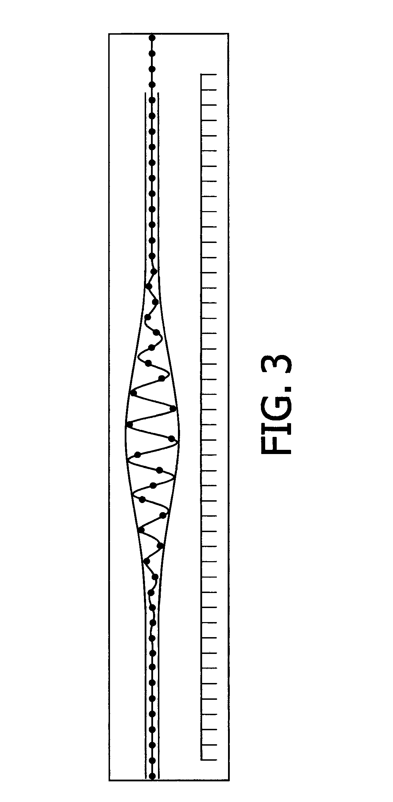

The method according to the invention involves the continuous scanning, during which pictures are made according to the above constraints. The signals resulting from the scanning are fed to the control and calculation unit. On the same way as in the prior art an modulation amplitude signal is determined as a function of the scanning movement for every pixel. This leads to the signal as is depicted in figure 3.

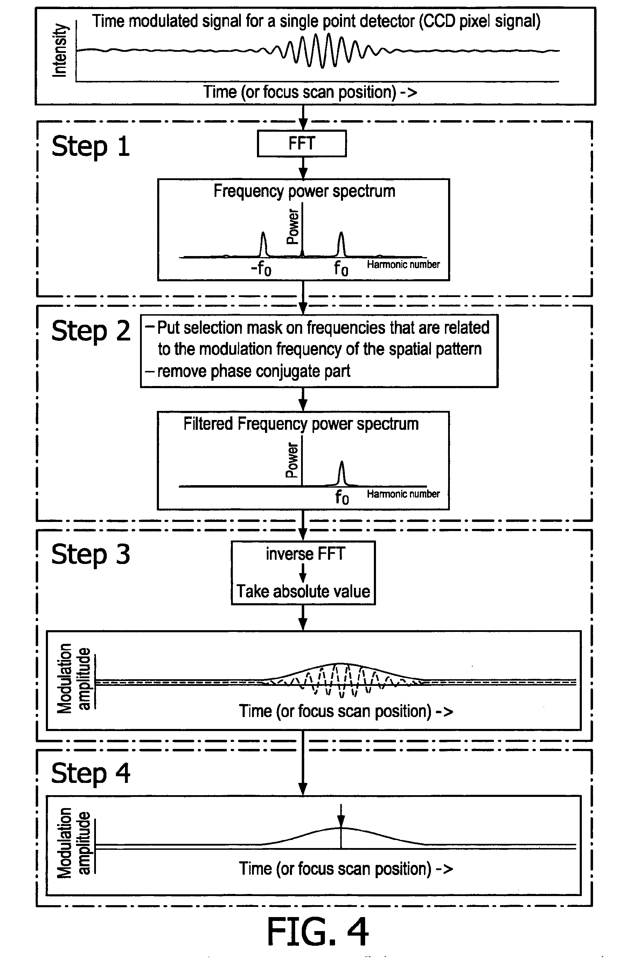

The scanning position at which the amplitude is maximal is the required position where the optical system is in focus. To determine said position the steps depicted in figure 4 are executed under control of the processing unit.

The upper window of figure 4 shows the signal of a spatial position of the detector, relating to a spatial position of the sample. That signal is, together with the signals relating to the other spatial positions conducted to the processing and control unit, where it is initially subjected to a Fourier transform, as depicted in step 1 of figure 4. The resulting frequency spectrum is shown. Further, in step 2, a selection mask or filter is applied to the Fourier transformed signal, so that only the frequency components remain which are related to the modulation frequency of the spatial pattern. Also the phase conjugate part of the signal is removed. The resulting frequency spectrum is depicted. In step 3 the resulting signal is inverse Fourier transformed. From the resulting signal the absolute value is taken. This is also shown in this figure.

Finally the scanning position relating to the maximum of said absolute value is determined. This is the peak position or position with the maximal amplitude where the system is in focus, and this position represents the height of the sample. The resulting figures for each spatial position are combined to form a height map of the sample.

It will be clear that numerous variations are possible within the scope of the invention as defined in the accompanying claims.

## Claims

1. Method for determining the height of a number of spatial positions on a sample (8), defining a height map of a surface (9) of said sample (8) comprising the following steps;
- irradiating the surface (9) of the sample (8) with light comprising a spatial periodic pattern which is periodic in a direction perpendicular to the optical axis and moving in a direction parallel to the direction in which the periodic pattern is periodic;
- scanning the surface in the direction of the optical axis and for each position of the surface; and
- detecting the light reflected by the sample by a detector (11) during the scanning,
-- wherein in any scanning position only a single image is taken,
-- wherein the movement of the phase of the spatial periodic pattern is an even movement and the scanning movement is an even movement;
-- wherein the scanning speed bears a predetermined relation to the phase of the periodic pattern; and
-- wherein the analysing of the output signal of the detector (11) includes for each spatial position of the detector the determination of the amplitude of the signal detected during the scanning and determining the scanning location where the amplitude is maximal, **characterized in that** the light reflected by the sample travels over partially the same path as the light irradiating of the sample (8) and that during scanning, more than two images are taken during a cycle of the spatial periodic pattern.

2. Method as claimed in claim 1, **characterized in that** the spatial periodic pattern is a sinusoidal periodic pattern or a binary periodic stripe pattern.

3. Method as claimed in claim 1 or 2, **characterized in that** the light source (2, 4) generates a strobing light of which the light pulses are synchronized with the phase of the moving projected periodic pattern.

4. Method as claimed in claim 1, 2 or 3, **characterized in that** the calculation of the amplitude of the periodic pattern are executed by performing a coherence peak detection method.

5. Method as claimed in claim 4, **characterized in that** the calculation of the amplitude of the periodic pattern comprises the following steps:
- subjecting the signal to a Fourier transform;
- removing the signal components of the Fourier transformed signal which are not related to the modulation of the projected spatially scanned pattern.
- removing the phase conjugate frequencies;
- subjecting the resulting signal to an inverse Fourier transform;
- taking the absolute value of the inverse Fourier transformed signal; and
- determining the scanning position where the absolute maximum value is reached.

6. Data carrier, containing digital instructions for performing the steps as claimed in any of the claims 1-5.

7. Apparatus for determining the height of a number of spatial positions on a sample, defining a height map of a surface, the apparatus comprising:
- a light source (2, 4) including pattern means (4) adapted to generate a light beam (3) having a spatial periodic pattern which is periodic in a direction perpendicular to the optical axis and which moves in the direction in which the pattern is periodic;
- an optical detector (11) adapted to convert the received light into electrical signals;
- optical means (5, 6, 7, 10) including scanning means (7) for directing light from the light source (2, 4) to the surface (9) and for directing the light reflected by the surface (9) to the optical detector (11);
- control means (12), adapted to control the scanning means (7) to perform a scanning action, to control the movement of the pattern means (4), to receive the signals from the optical detector and a processing unit to convert the signal received from the optical detector into a height map,
wherein the control means (12) are adapted to
- make only a single image in any scanning position;
- control the movement of the phase of the projected spatial periodic pattern to be an even movement;
- control the scanning movement to be an even movement;
- control the scanning speed to bear a predetermined relation to the phase of the projected periodic pattern and
- wherein the processing unit is adapted to analyse the output signal of the detector includes for each spatial position of the detector the determination of the amplitude of the signal detected during the scanning and determining the scanning location where the amplitude is maximal, **characterized in that** the optical paths established by the optical means (5, 6, 7, 10) between the sample (8) and the light source (2) and the detector (11) respectively are at least partially common and that the control means (12) are adapted to make more than two images during a cycle of the spatial periodic pattern.

8. Apparatus as claimed in claim 7, **characterized in that** the optical means comprise a beam splitter (6).

9. Apparatus as claimed in claim 8 or 9, **characterized in that** the light source (2, 4) is adapted to generate a sinusoidal periodic pattern or a binary periodic stripe pattern.

10. Apparatus as claimed claim 7, 8 or 9, **characterized in that** the light source (2, 4) generates a strobing light of which the light pulses are synchronized with the phase of the moving periodic pattern.

11. Apparatus as claimed in any of the claims 7-10, **characterized in that** the processing unit is adapted to calculate the amplitude of the periodic pattern by performing a coherence peak detection method.

12. Apparatus as claimed in claim 11, **characterized in that** the processing unit is adapted to calculate the amplitude of the periodic pattern by the following steps:
- subjecting the signal to a Fourier transform;
- removing the signal components of the Fourier transformed signal which are not related to the modulation of the projected spatially scanned pattern.
- removing the phase conjugate frequencies;
- subjecting the resulting signal to an inverse Fourier transform;
- taking the absolute value of the inverse Fourier transformed signal; and
- determining the scanning position where the absolute maximum value is reached.

## Patentansprüche

1. Verfahren zum Bestimmen der Höhe einer Reihe von räumlichen Positionen auf einer Probe (8), die eine Höhenkarte einer Oberfläche (9) der Probe (8) definieren, wobei das Verfahren die folgenden Schritte umfasst:
- Bestrahlen der Oberfläche (9) der Probe (8) mit Licht, das ein räumlich periodisches Muster umfasst, welches in einer Richtung senkrecht zur optischen Achse periodisch ist und sich in einer Richtung parallel zu der Richtung bewegt, in der das periodische Muster periodisch ist;
- Scannen der Oberfläche in der Richtung der optischen Achse und für jede Position der Oberfläche; und
- Erfassen des Lichtes, das von der Probe reflektiert wird, durch einen Detektor (11) während des Scannens,
- wobei in jeder Scanposition nur ein einziges Bild aufgenommen wird,
- wobei die Bewegung der Phase des räumlich periodischen Musters eine gleichförmige Bewegung ist und die Scanbewegung eine gleichförmige Bewegung ist;
- wobei die Scangeschwindigkeit eine vorgegebene Beziehung zur Phase des periodischen Musters aufweist; und
- wobei das Analysieren des Ausgangssignals des Detektors (11) für jede räumliche Position des Detektors das Bestimmen der Amplitude des Signals umfasst, welches während des Scannens und Bestimmens des Scanortes, an dem die Amplitude maximal ist, erfasst wird, **dadurch gekennzeichnet, dass** das Licht, das von der Probe reflektiert wird, teilweise über denselben Pfad wie das Licht wandert, das die Probe (8) bestrahlt, und dass während des Scannens mehr als zwei Bilder während eines Zyklus des räumlich periodischen Musters aufgenommen werden.

2. Verfahren nach Anspruch 1, **dadurch gekennzeichnet, dass** das räumlich periodische Muster ein sinusförmiges periodisches Muster oder ein binäres periodisches Streifenmuster ist.

3. Verfahren nach Anspruch 1 oder 2, **dadurch gekennzeichnet, dass** die Lichtquelle (2, 4) ein stroboskopisches Licht erzeugt, dessen Lichtimpulse mit der Phase des sich bewegenden projizierten periodischen Musters synchronisiert sind.

4. Verfahren nach Anspruch 1, 2 oder 3, **dadurch gekennzeichnet, dass** die Berechnung der Amplitude des periodischen Musters durch Ausführen eines Kohärenzpeakdetektionsverfahrens erfolgt.

5. Verfahren nach Anspruch 4, **dadurch gekennzeichnet, dass** die Berechnung der Amplitude des periodischen Musters die folgenden Schritte umfasst:
- das Signal einer Fourier-Transformation unterziehen;
- Entfernen der Signalkomponenten des Fourier-transformierten Signals, die sich nicht auf die Modulation des projizierten räumlich gescannten Musters beziehen;
- Entfernen der phasenkonjugierten Frequenzen;
- das sich ergebende Signal einer inversen Fourier-Transformation unterziehen;
- den Absolutwert des inversen Fourier-transformierten Signals nehmen; und
- Bestimmen der Scanposition, an der der absolute Maximalwert erreicht ist.

6. Datenträger, der digitale Anweisungen zum Ausführen der Schritte nach einem der Ansprüche 1-5 enthält.

7. Vorrichtung zum Bestimmen der Höhe einer Reihe von räumlichen Positionen auf einer Probe, die eine Höhenkarte einer Oberfläche definieren, wobei die Vorrichtung Folgendes umfasst:
- eine Lichtquelle (2, 4) einschließlich eines Mustermittels (4), das zum Erzeugen eines Lichtstrahls (3) ausgelegt ist, der ein räumlich periodisches Muster hat, welches in einer Richtung senkrecht zur optischen Achse periodisch ist und welches sich in der Richtung bewegt, in der das Muster periodisch ist;
- einen optischen Detektor (11), der zum Umwandeln des empfangenen Lichts in elektrische Signale ausgelegt ist;
- optische Mittel (5, 6, 7, 10), einschließlich Scanmittel (7), zum Lenken von Licht von der Lichtquelle (2, 4) zur Oberfläche (9) und zum Lenken des Lichts, das von der Oberfläche (9) reflektiert wird, zum optischen Detektor (11);
- Steuerungsmittel (12), das zum Steuern des Scanmittels (7) zum Ausführen einer Scanaktion, zum Steuern der Bewegung des Mustermittels (4), zum Empfangen der Signale vom optischen Detektor und einer Verarbeitungseinheit zum Umwandeln des Signals, das vom optischen Detektor empfangen wird, in eine Höhenkarte ausgelegt ist,
wobei das Steuerungsmittel (12) für Folgendes ausgelegt ist:
- Aufnehmen nur eines einzigen Bildes in einer beliebigen Scanposition;
- Steuern der Bewegung der Phase des projizierten räumlich periodischen Musters als gleichförmige Bewegung;
- Steuern der Scanbewegung als gleichförmige Bewegung;
- Steuern der Scangeschwindigkeit mit einer vorgegebenen Beziehung zur Phase des projizierten periodischen Musters und
- wobei die Verarbeitungseinheit zum Analysieren des Ausgangssignals des Detektors ausgelegt ist, einschließlich, für jede räumliche Position des Detektors, der Bestimmung der Amplitude des Signals, das während des Scannens und Bestimmens des Scanortes erfasst wird, an dem die Amplitude maximal ist, **dadurch gekennzeichnet, dass** die Strahlengänge, die von den optischen Mitteln (5, 6, 7, 10) zwischen der Probe (8) und der Lichtquelle (2) bzw. dem Detektor (11) hergestellt werden, zumindest teilweise gemeinsam sind und dass das Steuerungsmittel (12) zum Aufnehmen von mehr als zwei Bildern während eines Zyklus des räumlich periodischen Musters ausgelegt ist.

8. Vorrichtung nach Anspruch 7, **dadurch gekennzeichnet, dass** das optische Mittel einen Strahlteiler (6) umfasst.

9. Vorrichtung nach Anspruch 8 oder 9, **dadurch gekennzeichnet, dass** die Lichtquelle (2, 4) zum Erzeugen eines sinusförmigen periodischen Musters oder eines binären periodischen Streifenmusters ausgelegt ist.

10. Vorrichtung nach Anspruch 7, 8 oder 9, **dadurch gekennzeichnet, dass** die Lichtquelle (2, 4) ein stroboskopisches Licht erzeugt, dessen Lichtimpulse mit der Phase des sich bewegenden projizierten periodischen Musters synchronisiert sind.

11. Vorrichtung nach einem der Ansprüche 7-10, **dadurch gekennzeichnet, dass** die Verarbeitungseinheit zum Berechnen der Amplitude des periodischen Musters durch Ausführen eines Kohärenzpeakdetektionsverfahrens ausgelegt ist.

12. Vorrichtung nach Anspruch 11, **dadurch gekennzeichnet, dass** die Verarbeitungseinheit zum Berechnen der Amplitude des periodischen Musters durch die folgenden Schritte ausgelegt ist:
- das Signal einer Fourier-Transformation unterziehen;
- Entfernen der Signalkomponenten des Fourier-transformierten Signals, die sich nicht auf die Modulation des projizierten räumlich gescannten Musters beziehen;
- Entfernen der phasenkonjugierten Frequenzen;
- das sich ergebende Signal einer inversen Fourier-Transformation unterziehen;
- den Absolutwert des inversen Fourier-transformierten Signals nehmen; und
- die Scanposition bestimmen, an der der absolute Maximalwert erreicht ist.

## Revendications

1. Procédé pour déterminer la hauteur d'un nombre de positions spatiales sur un échantillon (8) et définir une carte de hauteurs d'une surface (9) dudit échantillon (8), comprenant les étapes suivantes :
- éclairer la surface (9) de l'échantillon (8) avec une lumière possédant un motif périodique spatial qui est périodique dans une direction perpendiculaire à l'axe optique et se déplace dans une direction parallèle à la direction dans laquelle le motif périodique est périodique ;
- balayer la surface dans la direction de l'axe optique pour chacune des positions de la surface ; et
- détecter la lumière réfléchie par l'échantillon à l'aide d'un détecteur (11) pendant le balayage ;
- dans lequel, dans n'importe quelle position de balayage, uniquement une seule image est prise ;
- dans lequel le mouvement de la phase du motif périodique spatial est un mouvement régulier et le mouvement de balayage est un mouvement régulier ;
- dans lequel la vitesse de balayage possède une relation prédéterminée par rapport à la phase du motif périodique ; et
- dans lequel l'analyse du signal de sortie du détecteur (11) consiste, pour chaque position spatiale du détecteur, à déterminer l'amplitude du signal détecté pendant le balayage et à déterminer le lieu de balayage où l'amplitude est maximale, **caractérisé en ce que** la lumière réfléchie par l'échantillon se déplace partiellement sur le même trajet que la lumière éclairant l'échantillon (8) et **en ce que**, durant le balayage, plus de deux images sont prises pendant un cycle du motif périodique spatial.

2. Procédé selon la revendication 1, **caractérisé en ce que** le motif périodique spatial est un motif périodique sinusoïdal ou un motif de bande périodique binaire.

3. Procédé selon les revendications 1 ou 2, **caractérisé en ce que** la source de lumière (2, 4) génère une lumière stroboscopique dont les impulsions de lumière sont synchronisées avec la phase du motif périodique projeté mouvant.

4. Procédé selon les revendications 1, 2 ou 3, **caractérisé en ce que** le calcul de l'amplitude du motif périodique est exécuté en effectuant un procédé de détection de pic de cohérence.

5. Procédé selon la revendication 4, **caractérisé en ce que** le calcul de l'amplitude du motif périodique comprend les étapes suivantes :
- soumettre le signal à une transformée de Fourier ;
- retirer les composantes de signal du signal transformé par transformée de Fourier qui ne sont pas liées à la modulation du motif balayé spatialement projeté ;
- retirer les fréquences de conjugués de phase ;
- soumettre le signal résultant à une transformée de Fourier inverse ;
- prendre la valeur absolue du signal transformé par transformée de Fourier inverse ; et
- déterminer la position de balayage où la valeur absolue maximale est atteinte.

6. Support de données comprenant des instructions numériques pour effectuer les étapes selon l'une quelconque des revendications 1 à 5.

7. Appareil pour déterminer la hauteur d'un nombre de positions spatiales sur un échantillon et définir une carte de hauteurs d'une surface, lequel appareil comprend :
- une source de lumière (2, 4) comprenant un moyen de type motif (4) conçue pour générer un faisceau lumineux (3) ayant un motif périodique spatial qui est périodique dans une direction perpendiculaire à l'axe optique et se déplace dans la direction dans laquelle le motif est périodique ;
- un détecteur optique (11) conçu pour convertir la lumière reçue en signaux électriques ;
- des moyens optiques (5, 6, 7, 10) comprenant un moyen de balayage (7) afin de diriger la lumière depuis la source de lumière (2, 4) vers la surface (9) et afin de diriger la lumière réfléchie par la surface (9) vers le détecteur optique (11) ;
- un moyen de commande (12) conçu pour commander le moyen de balayage (7) afin qu'il effectue une action de balayage, pour commander le mouvement du moyen de type motif (4), pour recevoir les signaux du détecteur optique et d'une unité de traitement pour convertir le signal reçu du détecteur optique en une carte de hauteurs ;
dans lequel le moyen de commande (12) est conçu pour :
- prendre une seule image uniquement dans n'importe quelle position de balayage ;
- commander le mouvement de la phase du motif périodique spatial projeté de sorte qu'il soit un mouvement régulier ;
- commander le mouvement de balayage de sorte qu'il soit un mouvement régulier ;
- commander la vitesse de balayage de sorte qu'elle possède une relation prédéterminée par rapport à la phase du motif périodique projeté ; et
- dans lequel l'unité de traitement est conçue pour analyser le signal de sortie du détecteur et va, pour chaque position spatiale du détecteur, déterminer l'amplitude du signal détecté pendant le balayage et déterminer le lieu de balayage où l'amplitude est maximale, **caractérisé en ce que** les trajets optiques établis par les moyens optiques (5, 6, 7, 10) entre l'échantillon (8) et la source de lumière (2) et le détecteur (11) sont respectivement au moins partiellement communs et **en ce que** le moyen de commande (12) est conçu pour prendre plus de deux images pendant un cycle du motif périodique spatial.

8. Appareil selon la revendication 7, **caractérisé en ce que** les moyens optiques comprennent un diviseur de faisceau (6).

9. Appareil selon les revendications 8 ou 9, **caractérisé en ce que** la source de lumière (2, 4) est conçue pour générer un motif périodique sinusoïdal ou un motif de bande périodique binaire.

10. Appareil selon les revendications 7, 8 ou 9, **caractérisé en ce que** la source de lumière (2, 4) génère une lumière stroboscopique dont les impulsions de lumière sont synchronisées avec la phase du motif périodique mouvant.

11. Appareil selon l'une quelconque des revendications 7-10, **caractérisé en ce que** l'unité de traitement est conçue pour calculer l'amplitude du motif périodique en effectuant un procédé de détection de pic de cohérence.

12. Appareil selon la revendication 11, **caractérisé en ce que** l'unité de traitement est conçue pour calculer l'amplitude du motif périodique en effectuant les étapes suivantes :
- soumettre le signal à une transformée de Fourier ;
- retirer les composantes de signal du signal transformé par transformée de Fourier qui ne sont pas liées à la modulation du motif balayé spatialement projeté ;
- retirer les fréquences de conjugués de phase ;
- soumettre le signal résultant à une transformée de Fourier inverse ;
- prendre la valeur absolue du signal transformé par transformée de Fourier inverse ; et
- déterminer la position de balayage où la valeur absolue maximale est atteinte.
